# EUROPÄISCHE PATENTSCHRIFT

(11) **EP 3 165 468 B1**
(45) Veröffentlichungstag und Bekanntmachung des Hinweises auf die Patenterteilung: **13.03.2019**
(21) Anmeldenummer: 16002328.9
(22) Anmeldetag: 02.11.2016
(51) Int. Cl.: B64F 5/30, B08B 6/00, C03C 23/00, H05K 3/28, B08B 7/02, B64D 15/16

(54) **MIKROELEKTRONISCHES MODUL ZUR REINIGUNG EINER OBERFLÄCHE, MODULANORDNUNG UND VERFAHREN ZUR REINIGUNG EINER OBERFLÄCHE**
MICROELECTRONIC MODULE FOR CLEANING A SURFACE, MODULE ARRAY AND METHOD OF CLEANING A SURFACE
MODULE MICRO-ÉLECTRONIQUE DESTINÉ AU NETTOYAGE D'UNE SURFACE, ENSEMBLE MODULAIRE ET PROCÉDÉ DE NETTOYAGE D'UNE SURFACE

(30) Priorität: 05.11.2015 DE 102015014256
(43) Veröffentlichungstag der Anmeldung: 10.05.2017
(73) Patentinhaber: Airbus Defence and Space GmbH, 82024 Taufkirchen (DE); Airbus Operations GmbH, 21129 Hamburg (DE)
(72) Erfinder: Caspari, Ralf, 82024 Taufkirchen (DE); Weichwald, Robert, 93354 Siegenburg (DE); Ermann, Emanuel, 85077 Oberstimm / Manching (DE); Heller, Gerd, 27367 Hellwege (DE)
(74) Vertreter: Krebs, Jörg

(56) Entgegenhaltungen:
- EP-A2- 2 662 284
- DE-A1- 10 261 875
- FR-A1- 2 667 256
- US-A- 4 732 351

## Beschreibung

Verschiedene Ausführungsformen betreffen allgemein ein mikroelektronisches Modul zur Reinigung einer Oberfläche, sowie ein Modularray und ein Verfahren zur Reinigung einer Oberfläche.

Die Entwicklung modernder Fahrzeuge, beispielsweise moderner Flugzeuge geht immer weiter dahin, die Kosten für den laufenden Betrieb zu senken. Ein großer Kostenfaktor ist hierbei beispielsweise der Kerosinverbrauch. Um den Kerosinverbrauch beispielsweise bei einem Flugzeug zu reduzieren, wird u.a. versucht die Aerodynamik des Flugzeugs zu verbessern. Dies geschieht beispielsweise im Bereich der Tragflächen durch sogenannte Winglets oder durch eine besondere Strukturierung von Teilen der Tragflächenvorderkanten um den Strömungswiderstand des Flugzeugs zu verringern. Derartige Verbesserungen beruhen häufig auf einem passiven Effekt, der beispielsweise bei sogenannten Riblets auf eine Verminderung des Reibungswiderstands auf turbulent überströmten Oberflächen beruhen, Bereiche der Tragflächen, bei denen beispielsweise Verunreinigungen zu einer Erhöhung des Reibungswiderstands führen, werden beispielsweise häufig mühevoll gereinigt um den Reibungswiderstand durch unerwünschte Verwirbelungen der umströmenden Luft zu reduzieren. Die Entfernung von Verunreinigungen ist insbesondere bei Tragflügeln mit teilweise laminarer Strömung von Vorteil, zumal jede Verunreinigung stromab turbulente Strömung und damit mehr Widerstand erzeugt. Diese Maßnahmen weisen jedoch den Nachteil auf, dass diese zeit- und kostenintensiv sind.

Aus US 4,732,351 A ist beispielsweise eine Vorrichtung zur Verhinderung der Bildung von Eis bzw. der Entfernung von Eis auf einer Oberfläche bekannt.

Sie stellt den nächstliegenden Stand der Technik dar und offenbart den Oberbegriff des Anspruchs 1.

Davon ausgehend ist es Aufgabe der Erfindung, eine Vorrichtung anzugeben, die die vorgenannten Nachteile vermeidet.

Diese Aufgabe wird mit einer Vorrichtung mit den Merkmalen des Anspruchs 1 gelöst. Beispielhafte Ausführungsformen sind in den abhängigen Ansprüchen dargestellt. Es sei darauf hingewiesen, dass die Merkmale der Ausführungsbeispiele der Vorrichtungen auch für Ausführungsformen des Verfahrens sowie Verwendung der Vorrichtung gelten und umgekehrt.

Es wird ein mikroelektronisches Modul zur Reinigung einer Oberfläche angegeben. Das mikroelektronische Modul weist wenigstens einen Spannungswandler zur Umwandlung einer bereitgestellten ersten Spannung in eine höhere, niedrigere oder identische zweite Spannung auf. Weiter weist das Modul wenigstens einen Aktuator auf. Der Aktuator weist wenigstens einen Generator zur Erzeugung eines Ionenstroms, eines elektrischen Plasmas, von Oberflächenwellen und/oder eines elektrostatischen Feldes aus der von dem Spannungswandler bereitgestellten zweiten Spannung auf. Wenigstens der Spannungswandler und der Aktuator sind auf einem dünnschichtigen flächigen Substrat angeordnet. Mittels des Aktuators erfolgt die wenigstens überwiegende Entfernung wenigstens eines an der Oberfläche haftenden Objekts.

Der Erfindung liegt der Gedanke zugrunde, ein an einer Oberfläche haftendes Objekt durch einen lonenstrom, ein elektrisches Plasma, eine Oberflächenwelle und/oder ein elektrostatisches Feld zu entfernen, um damit die Um- bzw. Überströmung einer Oberfläche zu verbessern, d.h. beispielsweise einen Strömungswiderstand zu reduzieren. Durch Integration der hierfür notwendigen Bauteile in einem sehr kleinen Maßstab auf einem flächigen Substrat, kann das Modul beispielsweise oberflächenkonform an einem Fahrzeug angebracht werden. Dadurch lässt sich beispielsweise der Kerosinverbrauch eines Flugzeugs, das beispielsweise eine Mehrzahl dieser Modul beispielsweise an einer Tragflächenvorderkante aufweist, reduzieren.

Die Bezeichnung "Oberfläche" kann als jedwede Art von Fläche verstanden werden, an der beispielsweise Objekte anhaften können und deren Anhaftung durch die hierin beschriebene Vorrichtung reduziert oder gar verhindert werden soll.

Die Bezeichnung "Spannungswandler" kann als jedes elektrische Element verstanden werden, das in der Lage ist, eine Eingangsspannung in eine höhere, niedrigere oder identische Ausgangsspannung umzuwandeln. Für den Fall, dass die Eingangsspannung der Ausgangsspannung entspricht, kann das elektrische Element auch beispielsweise aus einem elektrischen Verbindungselement bestehen.

Die Bezeichnung "anhaften" kann als jede Art von wenigstens zeitweiser Art von Verbindung verstanden werden, die zwischen einem Objekt und einer Oberfläche besteht. Hierbei ist die Verbindung wenigstens mit Hilfe der hierin beschriebenen Vorrichtung wenigstens teilweise oder vollständig lösbar, d.h. die Verbindung zwischen dem Objekt und der Oberfläche ist trennbar.

Gemäß einer bevorzugten Ausführungsform weist der Spannungswandler einen piezoelektrischen Transformator auf. Dies hat den Vorteil, dass piezoelektrische Transformatoren in einem sehr kleinen Maßstab gefertigt werden können.

Erfindungsgemäß ist das dünnschichtige flächige Substrat eine flexible und/oder mehrdimensional verformbare Folie oder Gitter. Beispielsweise kann das Gitter eine flexible und/oder mehrdimensional verformbare Gitterstruktur aufweisen. Das dünnschichtige flächige Substrat kann alternativ auch aus einem vergleichbaren Material bestehen, das geeignet ist, das die Bauteile des Moduls auf diesem auf-, ein- bzw, angebracht werden können und das möglichst dünn und stabil genug ist. Beispielsweise kann das Substrat auch ein Gewebe oder eine Gitterstruktur oder einen Verbundwerkstoff aufweisen. Dies hat den Vorteil, dass das Modul in seinen geometrischen Abmessungen gering gehalten werden kann, wobei eine ausreichende Stabilität gegeben ist, um das Modul beispielsweise auf einer Oberfläche dauerhaft oder reversibel an- bzw. aufzubringen, beispielsweise zu kleben.

Gemäß einer bevorzugten Ausführungsform wird die bereitgestellte erste Spannung für den Spannungswandler wenigstens teilweise über eine externe Spannungsquelle bereitgestellt. Beispielsweise wird die erste Spannung von einer Spannungsquelle außerhalb des Moduls bereitgestellt. Beispielsweise kann die Spannungsquelle ein Energieerzeugungselement sein, das wie das Modul auf einer Oberfläche aufgebracht ist. Alternativ kann das Energieerzeugungselement auch beispielsweise eine Antriebsvorrichtung eines Fahrzeugs sein, auf dessen Oberfläche das Modul angebracht ist. Dies hat den Vorteil, dass das Modul in seinen geometrischen Abmessungen sehr gering gehalten werden kann.

Gemäß einer bevorzugten Ausführungsform weist das Substrat weiter ein Energieerzeugungselement zur Erzeugung wenigstens eines Teils der bereitzustellenden ersten Spannung auf. Auf dem Substrat können beispielsweise ein oder mehrere Energieerzeugungselemente gleicher oder unterschiedlicher Art angeordnet sein, die die erste Spannung für das Modul bereitstellen. Zusätzlich zu dem wenigstens einen Energieerzeugungselement auf dem Substrat kann das Modul auch einen Anschluss zur Bereitstellung wenigstens eines Teils der ersten Spannung durch eine externe Spannungsquelle aufweisen. Dies hat den Vorteil, dass das Modul wenigstens teilweise oder vollständig autark von einer externen Spannungsquelle ist. Dies hat den weiteren Vorteil, dass das Modul flexibel in der Anbringen an oder auf beliebigen Oberflächen ist.

Gemäß einer bevorzugten Ausführungsform weist das Energieerzeugungselement eine Solarzellenanordnung oder ein Energie-Harvesting Element auf. Als "Energie-Harvesting Element" kann jedes Element verstanden werden, das in der Lage ist, kleine Mengen von elektrischer Energie aus Quellen wie Umgebungstemperatur, Vibrationen oder Luftströmungen zu gewinnen. Dafür einsetzbare Strukturen können auch als Nanogenerator bezeichnet werden.

Alternativ kann das Energieerzeugungselement auch eine anderweitige geeignete Vorrichtung zur Erzeugung von elektrischer Energie aufweisen. Dies hat den Vorteil, dass das Modul vorzugsweise unabhängig ist von einer externen Spannungsquelle und autark betrieben werden kann, Dies hat den weiteren Vorteil, dass das Modul flexibel in dem Anbringen an bzw. auf beliebigen Oberflächen ist. Bei der Anbringung des Moduls auf einer Oberfläche eines Flugzeugs eignet sich eine Solarzellenanordnung für die Erzeugung elektrischer Energie, da ein Flugzeug in der Flugphase vorzugsweise oberhalb der Wolkenschicht fliegt und dadurch keiner Abschattung der Sonne durch Wolken ausgesetzt ist.

Gemäß einer bevorzugten Ausführungsform weist das Modul eine Mehrzahl von Aktuatoren auf. Durch die Anordnung mehrerer Aktuatoren auf einem Modul, kann beispielsweise ein Spannungswandler für mehrere Aktuatoren vorgesehen sein. Dies hat den Vorteil, dass die zur Verfügung stehende Fläche effektiver ausgenutzt werden kann.

Gemäß einer bevorzugten Ausführungsform weist das Modul wenigstens ein Schaltelement zur Aktivierung und/oder Deaktivierung des Moduls und/oder wenigstens eines der Mehrzahl von Aktuatoren auf. Ein Schaltelement kann alternativ auch für zwei oder mehrere Module ausgeführt sein. Über das Schaltelement lassen sich somit zwei oder mehrere Module aktivieren und/oder deaktivieren. Dies hat den Vorteil, dass das Modul gezielt aktiviert oder deaktiviert werden kann und somit individuell gesteuert werden kann.

Die Bezeichnung "Schaltelement" kann als jede Art von Vorrichtung verstanden werden, die geeignet ist, eine Verbindung von einem unterbrochenen Zustand in einen verbundenen Zustand zu verändern. Hierunter kann auch eine einseitig offene Verbindung zu verstehen sein, die beispielsweise durch anschließen des Moduls an beispielsweise eine elektronische Einheit zur Steuerung dauerhaft oder reversibel geschlossen werden kann.

Gemäß einer bevorzugten Ausführungsform des Moduls aufweisend eine Mehrzahl von Aktuatoren kann das Modul ein oder mehrere Schaltelemente aufweisen, die eingerichtet sind, ein oder mehrere Aktuatoren der Mehrzahl von Aktuatoren zu aktivieren und/oder zu deaktivieren. Dies hat den Vorteil, dass das Modul individuell gesteuert werden kann und die geometrischen Abmessungen je nach Anwendung gering gehalten werden können.

Gemäß einer bevorzugten Ausführungsform weist das Modul wenigstens eine Erfassungseinheit auf. Die Erfassungseinheit ist eingerichtet, wenigstens die Präsenz eines an dem Modul haftenden Objekts zu erfassen. Als Erfassungseinheit kann beispielsweise ein Sensor angesehen werden, der eingerichtet ist, ein an dem Modul anhaftendes Objekt, beispielsweise eine Verunreinigung, zu detektieren, Beispielsweise kann der Sensor bzw. die Erfassungseinheit optisch, induktiv, kapazitiv oder dergleichen basierend sein. Dies hat den Vorteil, dass das Modul bei Präsenz eines Objekts auf dem Modul, beispielsweise eine Verunreinigung, gezielt aktiviert werden kann und nach Entfernung der Verunreinigung beispielsweise wieder deaktiviert werden kann.

Gemäß einer bevorzugten Ausführungsform ist der Aktuator weiter eingerichtet, wenigstens die Präsenz eines an dem Modul haftenden Objekts zu erfassen. Anstelle eines eigenen Sensors kann alternativ, oder auch ergänzend, der Aktuator dafür vorgesehen sein, die Präsenz eines anhaftenden Objekts, beispielsweise eine Verunreinigung, zu detektieren. Dies hat den Vorteil, dass beispielsweise eine Verunreinigung erkannt werden kann und das Modul bei Präsenz eines Objekts auf dem Modul gezielt aktiviert werden kann und nach Entfernung der Verunreinigung beispielsweise wieder deaktiviert werden kann.

Gemäß einer bevorzugten Ausführungsform weist das Modul wenigstens einen Sensor auf. Der Sensor ist eingerichtet, Informationen über das Modul, Informationen über das anhaftende Objekt und/ oder Informationen über die Umgebung des Moduls zu erfassen. Der Sensor kann beispielsweise mehrere Teilsensoren aufweisen, die geeignet sind Informationen über das Modul, Informationen über das anhaftende Objekt und/ oder Informationen über die Umgebung des Moduls zu erfassen. Dies hat den Vorteil, dass das Modul anhand der Informationen über das Modul, Informationen über das anhaftende Objekt und/ oder Informationen über die Umgebung des Moduls die den bzw. die Aktuatoren zur Reinigung der Oberfläche gezielt beeinflussen kann.

Gemäß einer weiteren Ausführungsform ist der Sensor ein Druck-, Temperatur- und/ oder Feuchtigkeitssensor.

Gemäß einer bevorzugten Ausführungsform weist das Modul einen Beschleunigungssensor und/ oder einen Lagesensor auf. Mit Hilfe des Beschleunigungssensors kann beispielsweise das Modul bei Ermittlung einer vorbestimmten Mindestbeschleunigung aktiviert werden. Bei Vorliegen einer negativen Beschleunigung kann das Modul beispielsweise deaktiviert werden oder umgekehrt. Mit Hilfe des Lagesensors kann beispielsweise die Lage des Moduls ermittelt werden, wobei das Modul bei bestimmten Orientierungen aktiviert bzw. deaktiviert werden kann. Der Beschleunigungssensor und/ oder der Lagesensor können beispielsweise in MEMS-Technologie ausgeführt sein.

Gemäß einer bevorzugten Ausführungsform weist das Modul wenigstens einen Empfänger auf. Der Empfänger ist eingerichtet ein Signal zu empfangen, wobei abhängig von dem Signal das Schaltelement schaltbar ist. Beispielsweise kann von einer zentralen Steuerungseinheit, die wenigstens einen Sender aufweist, ein Signal an das Modul übertragen werden. Das Signal kann beispielsweise dazu dienen, das Modul zu aktivieren oder zu deaktivieren. Alternativ kann das Signal auch einen komplexeren Aufbau aufweisen, um beispielsweise eine Mehrzahl von Aktuatoren auf einem Modul oder eine Mehrzahl von Modulen teilweise zu aktivieren und/ oder zu deaktivieren. Alternativ kann mit Hilfe eines Signals auch die Spannung und/ oder Amplitude eines oder mehrerer Aktuatoren gesteuert werden, Dies hat den Vorteil, dass das Modul individuell gesteuert werden kann.

Gemäß einer bevorzugten Ausführungsform weist das Modul einen Sender auf. Der Sender ist eingerichtet, ein Signal an einen Empfänger zu senden, wobei das Signal wenigstens Informationen über die von dem Modul erfassten Parametern umfasst. Das Signal umfasst beispielsweise Informationen über Druck, Temperatur und/ oder Feuchtigkeit die auf Oberfläche des Moduls einwirken. Anhand der übermittelten Parameter kann beispielsweise das Steuerelement ermitteln, ob und wie die zweite Spannung an den Aktuator bzw. die Aktuatoren angepasst werden kann. Dies hat den Vorteil, dass das Modul individuell gesteuert werden kann.

Gemäß einer weiteren Ausführungsform weist das Modul wenigstens einen Empfänger und wenigstens einen Sender auf. Der Empfänger und der Sender weisen vorzugsweise die gleichen Eigenschaften auf, wie die zuvor beschriebenen Empfänger und Sender.

Gemäß einer weiteren Ausführungsform weist das Modul ein Steuerelement auf. Das Steuerelement ist eingerichtet, abhängig von der ermittelten Information und/ oder der Präsenz wenigstens eines anhaftenden Objekts den Aktuator bzw. die Aktuatoren zu steuern. Das Steuerelement empfängt die durch beispielsweise einen Sensor auf dem Modul erfassten Informationen und steuert den Aktuator oder die Mehrzahl der Aktuatoren derart, dass die Entfernung eines am Modul anhaftenden Objekts, beispielsweise einer Verunreinigung, angepasst, bzw. verändert wird. Dies hat den Vorteil, dass das Modul individuell gesteuert werden kann.

Gemäß einer weiteren Ausführungsform sind der Spannungswandler, das Schaltelement, der Aktuator, die Erfassungseinheit, der Sensor, der Empfänger, der Sender und/ oder das Steuerelement als MEMS (Mikroelektromechanisches System)- Struktur ausgeführt. Durch die Ausführung vorzugsweise eines Großteils der Komponenten des Moduls als MEMS-Struktur kann das Modul in seinen geometrischen Abmessungen sehr gering gehalten werden.

Weiter wird ein Modularray, aufweisend eine Mehrzahl von zuvor beschriebenen mikroelektronischen Modulen angegeben. Dies hat den Vorteil, dass durch die Anordnung einer Mehrzahl der Module in einem Array der Reinigungseffekt verstärkt werden kann und/ oder gezielt ausgerichtet eingesetzt werden kann.

Gemäß einer Ausführungsform können auch mehrere mikroelektronische Module auf einem gemeinsamen dünnschichtigen flächigen Substrat angeordnet sein. Dies hat den weiteren Vorteil, dass die Module flexibel in der Anbringen an oder auf beliebigen Oberflächen sind.

Gemäß einer Ausführungsform ist die Mehrzahl der Module geometrisch derart angeordnet, dass sie eine Vorzugsrichtung aufweisen. Dies hat den Vorteil, dass die Module für die Entfernung von anhaftenden Objekten in einem vorgegebenen Bereich, beispielsweise an der Flügelvorderkante einer Flugzeugtragfläche, definiert angeordnet werden können.

Die Aktuatoren der Mehrzahl der Module sind hierbei vorzugsweise derart angeordnet, dass diese eine Wellenfront und/ oder eine Anregung einer Solitonwelle mit einer definierten Ausbreitungsrichtung erzeugen. Als Solitonwelle oder solitonartige Welle ist ein Wellenpaket zu verstehen, das sich vorzugsweise ohne Änderung seiner Form fortpflanzt.

Gemäß einer Ausführungsform sind die Aktuatoren der Mehrzahl der Module zeitversetzt und/ oder phasenverschoben ansteuerbar. Hierbei ist die Intensität durch Ausnutzung von Interferenzerscheinungen vorzugsweise maximierbar. Dies hat den Vorteil, dass die Aktuatoren des Moduls effektiv für die Reinigung einer Oberfläche eingesetzt werden können.

Weiter wird eine Anordnung wenigstens eines zuvor beschriebenen mikroelektronischen Moduls oder wenigstens eines zuvor beschriebenen Modularrays auf und/ oder in einer Oberfläche eines Luftfahrzeugs, eines Wasserfahrzeugs oder eines Landfahrzeugs angegeben.

Weiter wird ein Verfahren zur Reinigung einer Oberfläche unter Verwendung wenigstens eines zuvor beschriebenen mikroelektronischen Moduls oder wenigstens eines zuvor beschriebenen Modularrays angegeben. Bei dem Verfahren wird eine bereitgestellte erste Spannung in eine höhere, niedrigere oder identische zweite Spannung umgewandelt Weiter wird bei dem Verfahren ein lonenstrom, ein elektrisches Plasma, Oberflächenwellen und/ oder ein elektrostatisches Feld in Abhängigkeit von der zweiten Spannung erzeugt. Bei dem Verfahren wird weiter wenigstens ein an einer Oberfläche des Moduls oder des Modularrays haftendes Objekts mittels des erzeugten lonenstroms, elektrischen Plasmas, der Oberflächenwellen und/ oder des elektrostatischen Feldes entfernt.

Bei dem Verfahren wird vorzugsweise wenigstens ein an einer Oberfläche des Moduls oder des Modularrays haftendes Objekt durch den Aktuator wenigstens überwiegend entfernt.

In den Zeichnungen beziehen sich im Allgemeinen gleiche Bezugszeichen auf die gleichen Teile über die verschiedenen Ansichten hinweg. Die Zeichnungen sind nicht notwendigerweise maßstabsgetreu; Wert wird stattdessen im Allgemeinen auf die Veranschaulichung der Prinzipien der Erfindung gelegt. In der folgenden Beschreibung werden verschiedene Ausführungsformen der Erfindung beschrieben unter Bezugnahme auf die folgenden Zeichnungen, in denen:
- FIG. 1: eine erste Ausführungsform eines mikroelektronischen Moduls zeigt;
- FIG. 2: ein Modularray aufweisend eine Mehrzahl von mikroelektronischen Modulen zeigt;
- FIG. 3: die Anordnung einer Mehrzahl mikroelektronischer Module auf der Oberfläche eines Flugzeugs zeigt; und
- FIG. 4: ein Flussdiagramm eines Verfahrens zur Reinigung einer Oberfläche zeigt.

Die folgende detaillierte Beschreibung nimmt Bezug auf die beigefügten Zeichnungen, welche zur Erläuterung spezifische Details und Ausführungsformen zeigen, in welchem die Erfindung praktiziert werden kann.

Das Wort "beispielhaft" wird hierin verwendet mit der Bedeutung "als ein Beispiel, Fall oder Veranschaulichung dienend". Jede Ausführungsform oder Ausgestaltung, die hierin als "beispielhaft" beschrieben ist, ist nicht notwendigerweise als bevorzugt oder vorteilhaft gegenüber anderen Ausführungsformen oder Ausgestaltungen auszulegen.

In der folgenden ausführlichen Beschreibung wird auf die beigefügten Zeichnungen Bezug genommen, die einen Teil dieser Beschreibung bilden und in denen zur Veranschaulichung spezifische Ausführungsformen gezeigt sind, in denen die Erfindung ausgeübt werden kann. In dieser Hinsicht wird Richtungsterminologie wie etwa "oben", "unten", "vorne", "hinten", "vorderes", "hinteres", usw. mit Bezug auf die Orientierung der beschriebenen Figur(en) verwendet. Da Komponenten von Ausführungsformen in einer Anzahl verschiedener Orientierungen positioniert werden können, dient die Richtungsterminologie zur Veranschaulichung und ist auf keinerlei Weise einschränkend. Es versteht sich, dass andere Ausführungsformen benutzt und strukturelle oder logische Änderungen vorgenommen werden können, ohne von dem Schutzumfang der vorliegenden Erfindung abzuweichen. Es versteht sich, dass die Merkmale der hierin beschriebenen verschiedenen beispielhaften Ausführungsformen miteinander kombiniert werden können, sofern nicht spezifisch anders angegeben. Die folgende ausführliche Beschreibung ist deshalb nicht in einschränkendem Sinne aufzufassen, und der Schutzumfang der vorliegenden Erfindung wird durch die angefügten Ansprüche definiert.

Im Rahmen dieser Beschreibung werden die Begriffe "verbunden", "angeschlossen" sowie "gekoppelt" verwendet zum Beschreiben sowohl einer direkten als auch einer indirekten Verbindung, eines direkten oder indirekten Anschlusses sowie einer direkten oder indirekten Kopplung. In den Figuren werden identische oder ähnliche Elemente mit identischen Bezugszeichen versehen, soweit dies zweckmäßig ist.

Bei den hier beschriebenen Verfahren können die Schritte in nahezu jeder beliebigen Reihenfolge ausgeführt werden, ohne von den Prinzipien der Erfindung abzuweichen, wenn nicht ausdrücklich eine zeitliche oder funktionale Abfolge aufgeführt ist. Wenn in einem Patentanspruch dargelegt wird, dass zuerst ein Schritt ausgeführt wird und dann mehrere andere Schritte nacheinander ausgeführt werden, so ist dies so zu verstehen, dass der erste Schritt vor allen anderen Schritten durchgeführt wird, die anderen Schritte jedoch in jeder beliebigen geeigneten Reihenfolge durchgeführt werden können, wenn nicht innerhalb der anderen Schritte eine Abfolge dargelegt ist. Teile von Ansprüchen, in denen beispielsweise "Schritt A, Schritt B, Schritt C, Schritt D und Schritt E" aufgeführt sind, sind so zu verstehen, dass Schritt A zuerst ausgeführt wird, Schritt E zuletzt ausgeführt wird und die Schritte B, C und D in jeder beliebigen Reihenfolge zwischen den Schritten A und E ausgeführt werden können, und dass die Abfolge in den formulierten Schutzumfang des beanspruchten Verfahrens fällt. Des Weiteren können angegebene Schritte gleichzeitig ausgeführt werden, wenn nicht eine ausdrückliche Formulierung im Anspruch darlegt, dass sie separat auszuführen sind. Beispielsweise können ein Schritt zum Ausführung von X im Anspruch und ein Schritt zum Ausführen von Y im Anspruch gleichzeitig innerhalb eines einzelnen Vorgangs durchgeführt werden, und der daraus resultierende Prozess fällt in den formulierten Schutzumfang des beanspruchten Verfahrens.

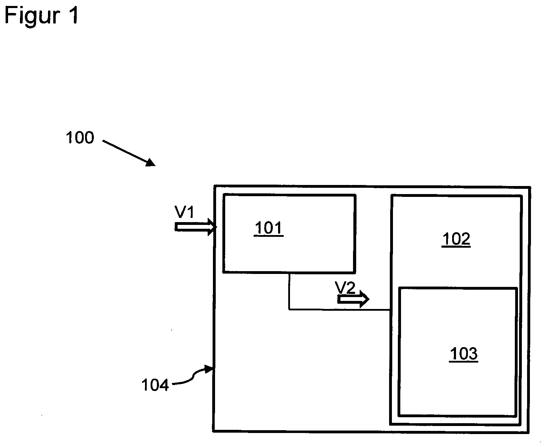

Figur 1 zeigt eine erste Ausführungsform eines mikroelektronischen Moduls 100 zur Reinigung einer Oberfläche. Das Modul 100 weist einen Spannungswandler 101 zur Umwandlung einer bereitgestellten ersten Spannung V1 in eine höhere, niedrigere oder identische zweite Spannung V2 auf. Weiter weist das Modul 100 einen Aktuator 102 auf. Der Aktuator 102 weist wenigstens einen Generator 103, zur Erzeugung eines lonenstroms, eines elektrischen Plasmas, von Oberflächenwellen und/ oder eines elektrostatischen Feldes aus der von dem Spannungswandler 101 bereitgestellten zweiten Spannung v2, auf. Der Spannungswandler 101 und der Aktuator 102 des Moduls 100 sind auf einem dünnschichtigen flächigem Substrat 104 angeordnet. Der Spannungswandler 101 und der Aktuator 102 des Moduls 100 sind miteinander elektrisch gekoppelt. Mittels des Aktuators 102 erfolgt die wenigstens überwiegende Entfernung wenigstens eines an der Oberfläche haftenden Objekts. Das Modul 100 kann zur gezielten Aktivierung und/ oder Deaktivierung des Aktuators 103 ein Schaltelement (nicht dargestellt) aufweisen. Das Modul 100 erhält in der dargestellten Ausführungsform die erste Spannung V1 von einer externen Spannungsquelle (nicht dargestellt) mit der der Spannungswandler 101 verbunden ist. Alternativ kann der Spannungswandler 101 auch beispielsweise an eine Solarzellenanordnung (nicht dargestellt) angeschlossen sein, die mit auf dem Substrat 104 angeordnet sein kann.

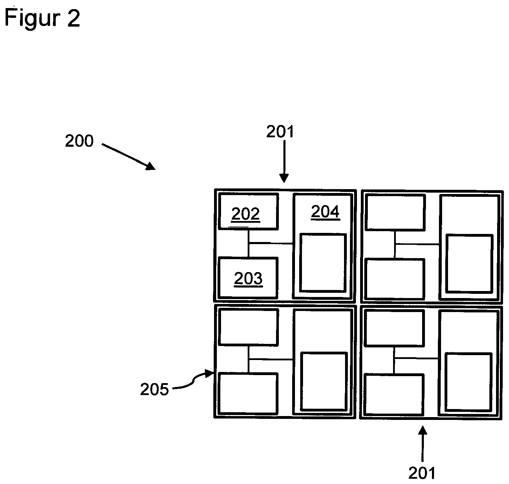

Figur 2 zeigt eine Ausführungsform eines Modularrays 200 aufweisend eine Mehrzahl von mikroelektronischen Modulen 201. Jedes der mikroelektronischen Module 201 weist einen Spannungswandler 202, ein Schaltelement 203 und einen Aktuator 204 auf einem dünnschichtigen flächigen Substrat 205 auf. Obwohl jedes der dargestellten Module 201 ein eigenes Schaltelement 204 aufweisen, kann gemäß einer alternativen Ausführungsform (nicht dargestellt) ein Schaltelement 204 auch für zwei oder mehrere Module 201 vorgesehen sein. Die mehreren Module 201 können beispielsweise miteinander verbunden oder unabhängig voneinander bestehen.

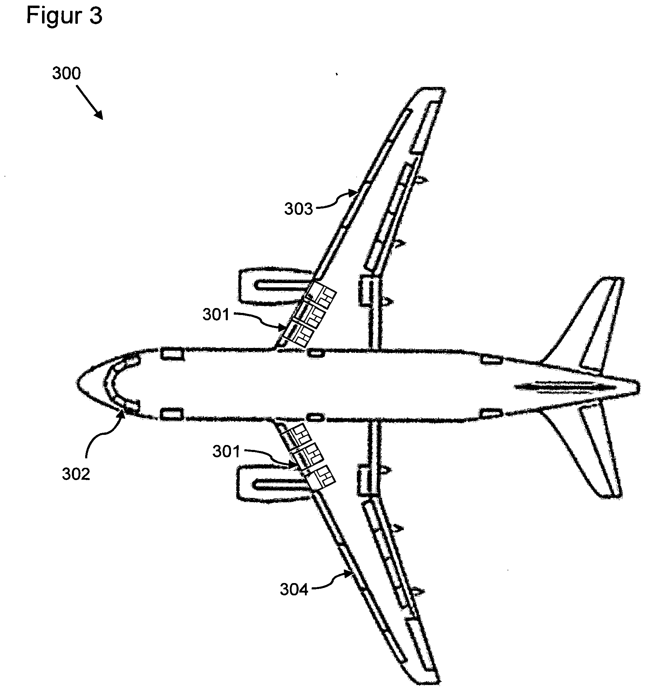

Figur 3 zeigt eine Ausführungsform einer Anordnung 300 einer Mehrzahl von mikroelektronischen Modulen 301 auf der Oberfläche eines Flugzeugs 302. Auf den Tragflächen 303, 304 des Flugzeugs 302 sind in der dargestellten Ausführungsform im Bereich der Tragflächenvorderkante mehrere mikroelektronische Module 301 angeordnet, um Verunreinigungen an der Tragflächenvorderkante zu entfernen oder wenigstens zu reduzieren. Die mikroelektronischen Module 301 sind miteinander verbunden (nicht dargestellt) um eine Verbesserung des Reinigungseffekts zu erreichen.

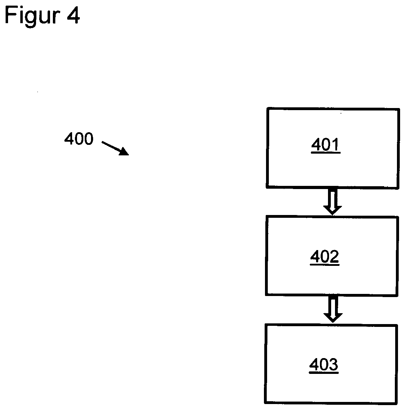

Figur 4 zeigt ein Flussdiagramm 400 einer Ausführungsform eins Verfahrens zur Reinigung einer Oberfläche unter Verwendung wenigstens eines mikroelektronischen Moduls oder wenigstens eines Modularrays. In Schritt 401 wird eine erste Spannung bereitgestellt, die in eine zweite Spannung umgewandelt wird, die höher, niedriger oder gleich groß ist, wie die erste Spannung. Mit Hilfe der zweiten Spannung wird in Schritt 402 ein lonenstrom, ein elektrisches Plasma, Oberflächenwellen und/oder ein elektrostatisches Feld erzeugt. In Schritt 403 wird mittels des erzeugten lonenstroms, des elektrischen Plasmas, der Oberflächenwellen und/oder des elektrostatischen Feldes wenigstens ein an einer Oberfläche des Moduls oder des Modularrays haftendes Objekt entfernt

Obwohl die Erfindung vor allem unter Bezugnahme auf bestimmte Ausführungsformen gezeigt und beschrieben worden ist, sollte von denjenigen, die mit dem Fachgebiet vertraut sind, verstanden werden, dass zahlreiche Änderungen bezüglich Ausgestaltung und Details daran vorgenommen werden können, ohne vom Wesen und Bereich der Erfindung, wie durch die angefügten Ansprüche definiert, abzuweichen. Der Bereich der Erfindung wird somit durch die angefügten Ansprüche bestimmt, und es ist daher beabsichtigt, dass sämtliche Änderungen, welche unter den Wortsinn oder den Äquivalenzbereich der Ansprüche fallen, umfasst werden.

### Bezugszeichenliste

- 100, 201, 301: Modul
- 101, 202: Spannungswandler
- 102, 204: Aktuator
- 103: Generator
- 104, 205: Substrat
- 200: Modularray
- 203: Schaltelement
- 300: Anordnung
- 302: Flugzeug
- 303, 304: Tragfläche
- 400: Flussdiagramm
- 401 - 403: Verfahrensschritte

- V1: erste Spannung
- V2: zweite Spannung

## Patentansprüche

1. Mikroelektronisches-Modul (100) zur Reinigung einer Oberfläche, aufweisend:
wenigstens einen Spannungswandler (101) zur Umwandlung einer bereitgestellten ersten Spannung (V1) in eine höhere, niedrigere oder identische zweite Spannung (V2);
wenigstens einen Aktuator (102), aufweisend wenigstens einen Generator (103) zur Erzeugung eines Ionenstroms, eines elektrischen Plasmas, von Oberflächenwellen und/ oder eines elektrostatischen Feldes aus der von dem Spannungswandler (101) bereitgestellten zweiten Spannung (V2);
wobei mittels des Aktuators (102) die wenigstens überwiegende Entfernung wenigstens eines an der Oberfläche haftenden Objekts erfolgt,
**dadurch gekennzeichnet, dass**
wenigstens der Spannungswandler (101) und der Aktuator (102) gemeinsam auf einer flexiblen und/ oder mehrdimensional verformbaren Folie oder Gitter (104) angeordnet sind.

2. Mikroelektronisches-Modul nach Anspruch 1,
wobei der Spannungswandler (101) einen piezoelektrischen Transformator aufweist.

3. Mikroelektronisches-Modul nach einem der vorherstehenden Ansprüche,
wobei die bereitgestellte erste Spannung (V1) für den Spannungswandler (101) wenigstens teilweise über eine externe Spannungsquelle bereitgestellt wird; und/oder
wobei das Modul (100) weiter ein Energieerzeugungselement zur Erzeugung wenigstens eines Teils der bereitzustellenden ersten Spannung aufweist;
wobei das Energieerzeugungselement eine Solarzellenanordnung oder ein Energie-Harvesting Element aufweist.

4. Mikroelektronisches-Modul nach einem der vorherstehenden Ansprüche,
wobei das Modul (100) eine Mehrzahl von Aktuatoren (102) aufweist; und oder,
wobei das Modul (100) wenigstens ein Schaltelement zur Aktivierung und/ oder Deaktivierung des Moduls und/ oder wenigstens eines der Mehrzahl von Aktuatoren aufweist.

5. Mikroelektronisches-Modul nach einem der vorherstehenden Ansprüche,
wobei das Modul (100) wenigstens eine Erfassungseinheit aufweist, die eingerichtet ist, wenigstens die Präsenz eines an dem Modul haftenden Objekts zu erfassen; oder
wobei der Aktuator (102) weiter eingerichtet ist, wenigstens die Präsenz eines an dem Modul haftenden Objekts zu erfassen.

6. Mikroelektronisches-Modul nach einem der vorherstehenden Ansprüche,
wobei das Modul (100) wenigstens einen Sensor aufweist, der eingerichtet ist, Informationen über das Modul (100), Informationen über das anhaftende Objekt und/ oder Informationen über die Umgebung des Moduls (100) zu erfassen, wobei der Sensor ein Druck-, Temperatur- und/oder Feuchtigkeitssensor ist.

7. Mikroelektronisches-Modul nach einem der vorherstehenden Ansprüche,
wobei das Modul (100) wenigstens einen Empfänger aufweist, der eingerichtet ist ein Signal zu empfangen, wobei abhängig von dem Signal das Schaltelement schaltbar ist; und/ oder
wobei das Modul (100) wenigstens einen Sender aufweist, der eingerichtet ist, ein Signal an einen Empfänger zu senden, wobei das Signal wenigstens Informationen über die von dem Modul (100) erfassten Parametern umfasst.

8. Mikroelektronisches-Modul nach einem der Ansprüche 5 bis 7,
wobei das Modul (100) ein Steuerelement aufweist, das eingerichtet ist, abhängig von der ermittelten Information und/ oder der Präsenz wenigstens eines anhaftenden Objekts den Aktuator (102) zu steuern.

9. Mikroelektronisches-Modul nach einem der vorherstehenden Ansprüche,
wobei der Spannungswandler (101), das Schaltelement, der Aktuator (102), die Erfassungseinheit, der Sensor, der Empfänger, der Sender und/oder das Steuerelement als MEMS-Struktur ausgeführt sind.

10. Modularray (200), aufweisend eine Mehrzahl von Mikroelektronischen-Modulen (201) nach einem der vorherstehenden Ansprüche.

11. Modularray nach Anspruch 10,
wobei die Mehrzahl der Module (201) geometrisch derart angeordnet sind, dass sie eine Vorzugsrichtung aufweisen;
wobei die Aktuatoren (204) der Mehrzahl der Module (201) derart angeordnet sind, eine Wellenfront und/oder eine Anregung einer Solitonwelle mit einer definierten Ausbreitungsrichtung zu erzeugen.

12. Modularray nach Anspruch 10 oder 11,
wobei die Aktuatoren (204) der Mehrzahl der Module (201) zeitversetzt und/oder phasenverschoben ansteuerbar sind;
wobei die Intensität durch Ausnutzung von Interferenzerscheinungen maximierbar ist.

13. Fahrzeug, aufweisend eine Oberfläche und eine Anordnung (300) wenigstens eines Mikroelektronischen-Moduls (301) nach einem der Ansprüche 1-9 oder wenigstens eines Modularrays nach einem der Ansprüche 10 bis 12 auf und/ oder in der Oberfläche, wobei das Fahrzeug ein Luftfahrzeug, ein Wasserfahrzeug oder ein Landfahrzeug ist.

14. Verfahren (400) zur Reinigung einer Oberfläche unter Verwendung wenigstens eines Mikroelektronischen-Moduls nach einem der Ansprüche 1-9 oder wenigstens eines Modularrays nach einem der Ansprüche 10-12 umfassend die Schritte:
Umwandeln einer bereitgestellten ersten Spannung in eine höhere, niedrigere oder identische zweite Spannung (401);
Erzeugen eines lonenstroms, eines elektrischen Plasmas, von Oberflächenwellen und/ oder eines elektrostatischen Feldes in Abhängigkeit von der zweiten Spannung (402); und
Entfernung wenigstens eines an einer Oberfläche des Moduls oder des Modularrays haftenden Objekts mittels des erzeugten lonenstroms, elektrischen Plasmas, der Oberflächenwellen und/ oder des elektrostatischen Feldes (403).

## Claims

1. Microelectronic module (100) for cleaning a surface, comprising:
at least one voltage converter (101) for converting a first voltage (V1) provided into a higher, lower or identical second voltage (V2);
at least one actuator (102), comprising at least one generator (103) for generating an ion current, an electrical plasma, surface waves and/or an electrostatic field from the second voltage (V2) provided by the voltage converter (101);
wherein at least one object adhering to the surface is at least predominantly removed by the actuator (102),
**characterized in that**
at least the voltage converter (101) and the actuator (102) are arranged jointly on a flexible and/or multidimensionally deformable film or lattice (104).

2. Microelectronic module according to Claim 1,
wherein the voltage converter (101) comprises a piezoelectric transformer.

3. Microelectronic module according to either of the preceding claims,
wherein the first voltage (V1) provided for the voltage converter (101) is at least partly provided via an external voltage source; and/or
wherein the module (100) furthermore comprises an energy generating element for generating at least part of the first voltage to be provided;
wherein the energy generating element comprises a solar cell arrangement or an energy harvesting element.

4. Microelectronic module according to any of the preceding claims,
wherein the module (100) comprises a plurality of actuators (102); and/or
wherein the module (100) comprises at least one switching element for activating and/or deactivating the module and/or at least one of the plurality of actuators.

5. Microelectronic module according to any of the preceding claims,
wherein the module (100) comprises at least one detection unit configured to detect at least the presence of an object adhering to the module; or
wherein the actuator (102) is furthermore configured to detect at least the presence of an object adhering to the module.

6. Microelectronic module according to any of the preceding claims,
wherein the module (100) comprises at least one sensor configured to detect information about the module (100), information about the adhering object and/or information about the surroundings of the module (100), wherein the sensor is a pressure, temperature and/or moisture sensor.

7. Microelectronic module according to any of the preceding claims,
wherein the module (100) comprises at least one receiver configured to receive a signal, wherein the switching element is switchable depending on the signal; and/or
wherein the module (100) comprises at least one transmitter configured to transmit a signal to a receiver, wherein the signal comprises at least information about the parameters detected by the module (100) .

8. Microelectronic module according to any of Claims 5 to 7,
wherein the module (100) comprises a control element configured to control the actuator (102) depending on the information determined and/or the presence of at least one adhering object.

9. Microelectronic module according to any of the preceding claims,
wherein the voltage converter (101), the switching element, the actuator (102), the detection unit, the sensor, the receiver, the transmitter and/or the control element are/is embodied as a MEMS structure.

10. Module array (200) comprising a plurality of micro electronic modules (201) according to any of the preceding claims.

11. Module array according to Claim 10,
wherein the plurality of modules (201) are arranged geometrically in such a way that they have a preferred direction;
wherein the actuators (204) of the plurality of modules (201) are arranged in such a way as to generate a wavefront and/or an excitation of a soliton wave having a defined direction of propagation.

12. Module array according to Claim 10 or 11,
wherein the actuators (204) of the plurality of modules (201) are driveable in a temporally offset and/or phase-shifted manner;
wherein the intensity is maximizable by utilization of interference phenomena.

13. Vehicle comprising a surface and an arrangement (300) of at least one microelectronic module (301) according to any of Claims 1-9 or at least one module array according to any of Claims 10 to 12 on and/or in the surface, wherein the vehicle is an aircraft, a water craft or a land vehicle.

14. Method (400) for cleaning a surface using at least one microelectronic module according to any of Claims 1-9 or at least one module array according to any of Claims 10-12 comprising the following steps:
converting a first voltage provided into a higher, lower or identical second voltage (401);
generating an ion current, an electrical plasma, surface waves and/or an electrostatic field depending on the second voltage (402); and
removing at least one object adhering to a surface of the module or of the module array by means of the generated ion current, electrical plasma, surface waves and/or electrostatic field (403).

## Revendications

1. Module microélectronique (100) destiné au nettoyage d'une surface, comprenant :
au moins un convertisseur de tension (101) destiné à convertir une première tension (V1) délivrée en une seconde tension (V2) supérieure, inférieure ou identique ;
au moins un actionneur (102) comportant au moins un générateur (103) destiné à générer un courant d'ions, un plasma électrique, des ondes de surface et/ou un champ électrostatique à partir de la seconde tension (V2) délivrée par le convertisseur de tension (101) ;
dans lequel l'élimination au moins prédominante d'au moins un objet adhérant à la surface est effectuée au moyen de l'actionneur (102),
**caractérisé en ce qu'**au moins le convertisseur de tension (101) et l'actionneur (102) sont disposés ensemble sur une feuille ou une grille (104) flexible et/ou déformable de manière multidimensionnelle.

2. Module microélectronique selon la revendication 1,
dans lequel le convertisseur de tension (101) comprend un transformateur piézoélectrique.

3. Module microélectronique selon l'une quelconque des revendications précédentes,
dans lequel la première tension (V1) délivrée destinée au convertisseur de tension (101) est délivrée au moins partiellement par l'intermédiaire d'une source de tension externe ; et/ou
dans lequel le module (100) comporte en outre un élément générateur d'énergie destiné à générer au moins une partie de la première tension devant être délivrée ; dans lequel l'élément générateur d'énergie comprend un ensemble de cellules solaires ou un élément collecteur d'énergie.

4. Module microélectronique selon l'une quelconque des revendications précédentes,
dans lequel le module (100) comporte une pluralité d'actionneurs (102) ; et/ou
dans lequel le module (100) comporte au moins un élément de commutation destiné à l'activation et/ou à la désactivation du module et/ou d'au moins l'un de la pluralité d'actionneurs.

5. Module microélectronique selon l'une quelconque des revendications précédentes,
dans lequel le module (100) comprend au moins une unité de détection conçue pour détecter au moins la présence d'un objet adhérant au module ; ou
dans lequel l'actionneur (102) est en outre conçu pour détecter au moins la présence d'un objet adhérant au module.

6. Module microélectronique selon l'une quelconque des revendications précédentes,
dans lequel le module (100) comprend au moins un capteur conçu pour détecter des informations concernant le module (100), des informations concernant l'objet qui adhère et/ou des informations concernant l'environnement du module (100), dans lequel le capteur est un capteur de pression, de température et/ou d'humidité.

7. Module microélectronique selon l'une quelconque des revendications précédentes,
dans lequel le module (100) comporte au moins un récepteur conçu pour recevoir un signal, dans lequel l'élément de commutation peut être amené à commuter en fonction du signal ; et/ou
dans lequel le module (100) comporte au moins un émetteur conçu pour transmettre un signal à un récepteur, dans lequel le signal comprend au moins des informations concernant les paramètres détectés par le module (100).

8. Module microélectronique selon l'une quelconque des revendications 5 à 7,
dans lequel le module (100) comporte un élément de commande conçu pour commander l'actionneur (102) en fonction des informations déterminées et/ou de la présence d'au moins un objet qui adhère.

9. Module microélectronique selon l'une quelconque des revendications précédentes,
dans lequel le convertisseur de tension (101), l'élément de commutation, l'actionneur (102), l'unité de détection, le capteur, le récepteur, l'émetteur et/ou l'élément de commande sont réalisés sous forme de structure MEMS.

10. Groupement de modules (200) comportant une pluralité de modules microélectroniques (201) selon l'une quelconque des revendications précédentes.

11. Groupement de modules selon la revendication 10,
dans lequel la pluralité de modules (201) sont agencés géométriquement de manière à présenter une direction préférée ;
dans lequel les actionneurs (204) de la pluralité de modules (201) sont agencés de manière à générer un front d'onde et/ou une excitation d'une onde soliton qui présente une direction de propagation définie.

12. Groupement de modules selon la revendication 10 ou 11,
dans lequel les actionneurs (204) de la pluralité de modules (201) sont temporisés et/ou déphasés de manière commandable ;
dans lequel l'intensité peut être rendue maximale par utilisation de phénomènes d'interférence.

13. Véhicule présentant une surface et un ensemble (300) d'au moins un module microélectronique (301) selon l'une quelconque des revendications 1-9 ou au moins un groupement de modules selon l'une quelconque des revendications 10 à 12 sur et/ou dans la surface, dans lequel le véhicule est un aéronef, une embarcation ou un véhicule terrestre.

14. Procédé (400) destiné au nettoyage d'une surface par utilisation d'au moins un module microélectronique selon l'une quelconque des revendications 1-9 ou d'au moins un groupement de modules selon l'une quelconque des revendications 10-12, comprenant les étapes consistant à :
convertir une première tension délivrée en une seconde tension supérieure, inférieure ou identique (401) ;
générer un courant d'ions, un plasma électrique, des ondes de surface et/ou un champ électrostatique en fonction de la seconde tension (402) ; et
éliminer au moins un objet adhérant à une surface du module ou du groupement de modules au moyen du courant d'ions, du plasma électrique, des ondes de surface et/ou du champ électrostatique générés (403).
